# FASCICULE DE BREVET EUROPEEN

(11) **EP 3 271 244 B1**
(45) Date de publication et mention de la délivrance du brevet: **01.05.2019**
(21) Numéro de dépôt: 16707791.6
(22) Date de dépôt: 03.03.2016
(51) Int. Cl.: B64C 13/10, B64C 27/56, G05G 5/03

(54) **DISPOSITIF DE COMMANDE DE VOL D'UN AERONEF**
VORRICHTUNG ZUR FLUGSTEUERUNG EINES LUFTFAHRZEUGS
AIRCRAFT FLIGHT CONTROL DEVICE

(30) Priorité: 16.03.2015 FR 1552144
(43) Date de publication de la demande: 24.01.2018
(73) Titulaire: Safran Electronics & Defense, 92100 Boulogne-Billancourt (FR)
(72) Inventeur: CREMIERE, Benoit, 92100 Boulogne-Billancourt (FR); BARA, Cédric, 92100 Boulogne-Billancourt (FR); BEZANERE, Daniel, 92100 Boulogne-Billancourt (FR); AMARAL, Manuel, 92100 Boulogne-Billancourt (FR); GOMOLKO, Oleg, 92100 Boulogne-Billancourt (FR); COPPEE, Pascal, 92100 Boulogne-Billancourt (FR)
(74) Mandataire: Decorchemont, Audrey Véronique Christèle
(86) Numéro de dépôt international: PCT/EP2016/054566
(87) Numéro de publication internationale: WO 2016/146398

(56) Documents cités:
- EP-A1- 2 597 034
- EP-A1- 2 631 170
- EP-A2- 2 078 998
- FR-A1- 2 766 158
- FR-A1- 2 872 128
- FR-A1- 2 872 306

## Description

L'invention concerne un dispositif de commande de vol d'aéronef. L'invention concerne plus particulièrement, bien que non exclusivement, la commande du pas collectif d'un hélicoptère.

### ARRIERE-PLAN TECHNOLOGIQUE DE L'INVENTION

Un dispositif de commande de vol d'un hélicoptère permet de commander des mouvements de l'hélicoptère à partir de mouvements imposés par le pilote à un levier de commande. Par exemple, le pas collectif d'un hélicoptère permet de changer l'inclinaison des pales pour faire monter ou descendre l'hélicoptère.

Toutefois, lorsque le pilote commande le pas collectif cela modifie la puissance délivrée par la turbine principale. Ainsi, le pilote doit constamment s'assurer à ne pas atteindre les limites de surrégime et de sous-régime de la turbine lors d'une commande du pas collectif alors même que ces limites peuvent évoluer en fonction par exemple des phases de vol (décollage, phase de montée, de descente...) . Ceci complexifie grandement sa tâche de pilotage.

Pour aider le pilote, il est connu de l'avertir par une alarme sonore ou visuelle lorsqu'il atteint ou s'approche des limites de surrégime ou de sous-régime de la turbine lors d'une commande du pas collectif.

Ce type d'avertissement peut cependant s'avérer pénible et stressant pour le pilote sur le long terme.

Des dispositifs de commande sont connus par FR 2 872 128 A1, EP 2 631 170 A1, EP 2 597 034 A1 et EP 2 078 998 A2.

### OBJET DE L'INVENTION

Un but de l'invention est de proposer un dispositif de commande de vol pour aéronef qui permette d'obvier au moins en partie à l'inconvénient précité.

### BREVE DESCRIPTION DE L'INVENTION

En vue de la réalisation de ce but, on propose un dispositif de commande de vol d'un aéronef, comportant :
- un levier de liaison qui est destiné à être solidarisé à un levier de commande et qui est apte à être pivoté autour d'au moins un axe de rotation,
- des moyens mécaniques de limitation d'une course angulaire du levier de liaison selon ledit axe de rotation, la course angulaire étant alors définie par une plage angulaire finie,
- des premiers moyens de génération d'un effort de rappel du levier de liaison autour dudit axe de rotation, les premiers moyens étant reliés de façon permanente au levier de liaison ,
- des deuxièmes moyens de génération d'un effort de rappel, qui sont agencés en parallèle des premiers moyens, au moins un élément des deuxièmes moyens et le levier de liaison comprenant des moyens mécaniques de leur liaison temporaire qui sont agencés pour être actifs lorsque le levier de liaison est déplacé au-delà d'une position angulaire prédéterminée dans la plage angulaire, les deuxièmes moyens comprenant au moins un point d'ancrage apte à définir ladite position prédéterminée et étant agencés pour permettre un déplacement dudit point d'ancrage relativement aux moyens de limitation de la course angulaire pour redéfinir en service ladite position prédéterminée.

Ainsi, en plaçant de façon appropriée le point d'ancrage, la résistance imposée au levier de liaison est augmentée lorsque le pilote déplace le levier de liaison, via le levier de commande, au-delà de la position prédéterminée ce qui l'avertit qu'il s'approche des limites opérationnelles d'organes entraînés ou liés audit dispositif de commande de vol. Le pilote peut alors déplacer le levier de commande, et donc le levier de liaison, dans l'autre sens pour sentir la résistance diminuer et ainsi ne pas abîmer le dispositif et les organes de pilotage que ledit dispositif contrôle ou auxquels il est lié. Toutefois, le levier de liaison n'est pas bloqué de sorte qu'en cas d'urgence le pilote peut malgré tout forcer sur le levier de liaison pour s'opposer à la résistance imposée au levier de liaison afin de continuer à déplacer le levier de liaison au-delà de la position prédéterminée.

Ainsi, le dispositif de commande permet d'assister efficacement le pilote dans sa tâche de pilotage puisque le pilote ressent de façon très intuitive, par retour d'efforts, qu'il s'approche des limites opérationnelles.

Par ailleurs, les limites opérationnelles des différents organes liés ou entraînés par le dispositif de commande de vol peuvent évoluer lors d'un vol en fonction par exemple de la phase de vol dans laquelle l'aéronef se trouve. De façon avantageuse, le dispositif selon l'invention est agencé pour redéfinir en service la position prédéterminée et ainsi adapter ladite position prédéterminée en fonction des phases de vol pour tenir compte du changement des limites opérationnelles.

### BREVE DESCRIPTION DES DESSINS

L'invention sera mieux comprise à la lumière de la description qui suit de modes de réalisation particuliers, non limitatifs de l'invention. Il sera fait référence aux figures ci-jointes, parmi lesquelles :
- la figure 1 illustre schématiquement le dispositif de commande de vol selon un premier mode de réalisation de l'invention,
- la figure 2 est une vue schématique d'une partie du dispositif de commande de vol illustré à la figure 1 lorsque la position prédéterminée a une première valeur,
- la figure 3 est une vue schématique d'une partie du dispositif de commande de vol illustré à la figure 1 lorsque la position prédéterminée a une deuxième valeur,
- la figure 4 est une vue schématique d'une partie du dispositif de commande de vol illustré à la figure 1 lorsque la position prédéterminée a une troisième valeur,
- la figure 5 est une vue en perspective partielle du dispositif de commande de vol illustré à la figure 1,
- la figure 6 illustre schématiquement le dispositif de commande de vol selon un deuxième mode de réalisation de l'invention,
- la figure 7 est une vue schématique d'une partie du dispositif de commande de vol illustré à la figure 6 lorsque la position prédéterminée a une première valeur.

### DESCRIPTION DETAILLEE DE L'INVENTION

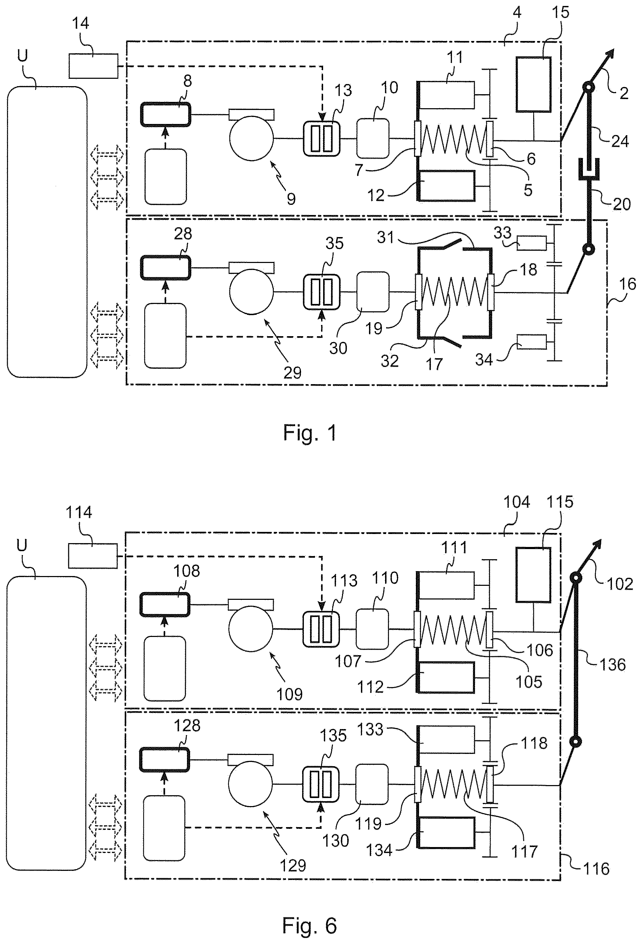

En référence aux figures 1 à 5, le dispositif de commande de vol d'un aéronef selon le premier mode de réalisation de l'invention est décrit en relation avec la commande du pas collectif d'un hélicoptère.

Le dispositif comporte ainsi un bâti 1 et un levier de liaison 24 qui est monté pivotant sur le bâti 1 selon un axe de rotation X. Ledit levier de liaison 24 est ici destiné à être solidarisé au pas collectif 2 qui est un levier de commande. Le levier de liaison 24 comporte par exemple une bielle.

De façon connue en soi, le dispositif comporte des moyens mécaniques 3 de limitation d'une course angulaire du levier de liaison 24 selon ledit axe de rotation X, la course angulaire étant alors définie par une plage angulaire 200 d'angle a.

Le dispositif comporte en outre des premiers moyens 4 de génération d'un effort de rappel du levier de liaison 24 autour dudit axe de rotation X.

A cet effet, les premiers moyens 4 comprennent un premier ressort 5 comprenant un premier plateau 6 qui est solidaire de l'une des extrémités du premier ressort et qui est en outre liée en rotation au levier de liaison 24. Les premiers moyens 4 sont ainsi reliés de façon permanente au levier de liaison 24. Les premiers moyens 4 comportent en outre un deuxième plateau 7 qui est solidaire de l'autre des extrémités du premier ressort 5. Les premiers moyens 4 comportent en outre un premier organe moteur 8 auquel est relié un ensemble de transmission de mouvement comprenant ici un système de transformation de mouvement 9, tel qu'un ensemble vis sans fin/écrou, et un système de réduction 10. La vis sans fin est liée en rotation à un arbre de sortie du premier organe moteur 8 et forme ainsi l'élément d'entrée de l'ensemble de transmission. L'arbre de sortie du système de réduction 10 est solidaire du deuxième plateau 7 du premier ressort 5 et forme ainsi l'élément de sortie de l'ensemble de transmission.

De préférence, les premiers moyens 4 comportent ici un premier capteur de déplacement angulaire 11 agencé au niveau du premier ressort 5 pour estimer la position relative entre la première extrémité et la deuxième extrémité du premier ressort 5. Le premier capteur de déplacement angulaire 11 est par exemple un capteur RVDT double. Afin d'assurer une redondance, les premiers moyens 4 comportent également un deuxième capteur de déplacement angulaire 12, par exemple de type RVDT double, agencé au niveau du premier ressort 5 pour estimer la position relative entre la première extrémité et la deuxième extrémité du premier ressort 5. Le premier organe moteur 8 est en outre alimenté via une unité de commande U qui contrôle l'alimentation du premier organe moteur 8, et donc le déplacement de la deuxième extrémité relativement à la première extrémité du premier ressort 5, notamment à partir des informations générées par le premier capteur de déplacement angulaire 11 et le deuxième capteur de déplacement angulaire 12.

De la sorte, lorsque le levier de liaison 24 est déplacé par le pilote, via le levier de commande 2, le premier ressort 5 est mis sous contrainte par un déplacement de sa première extrémité relativement à sa deuxième extrémité ce qui engendre la génération d'un effort de rappel sur le levier de liaison 24.

En outre, de façon indépendante au mouvement imposé par le pilote via le levier de commande 2, il s'avère également possible de modifier la position relative de la deuxième extrémité du premier ressort 5 relativement à la première extrémité du premier ressort 5 en déplaçant le deuxième plateau 7 à l'aide du premier organe moteur 8. Ce déplacement du deuxième plateau 7 n'est toutefois jamais effectué simultanément à un mouvement imposé par le pilote au levier de liaison 24.

De façon particulière, l'ensemble de transmission de mouvement comporte des moyens d'accouplement temporaire 13 agencés ici dans l'ensemble de transmission de mouvement entre le système de transformation de mouvement 9 et le système de réduction 10. Les moyens d'accouplement temporaire 13 peuvent être désactivés directement par le pilote via un bouton de commande 14 agencé sur le levier de commande 2 ou sur une console de l'hélicoptère. Lorsque les moyens d'accouplement temporaire 13 sont désactivés, le premier ressort 5 n'est plus accouplé au premier organe moteur 8, et notamment au deuxième plateau 7, de sorte il n'y a plus de retour d'efforts réalisé par les premiers moyens 4.

Les premiers moyens 4 comportent en outre un élément de friction sèche 15 qui est agencé de sorte à être relié de façon permanente au levier de liaison 24. Ledit élément de friction sèche permet de générer un couple résistif purement mécanique sur le levier de liaison 24. Ceci permet aux premiers moyens 4 de toujours réaliser un retour d'effort sur le levier de liaison 24 même en cas de casse du ressort par exemple.

Selon l'invention, le dispositif comporte des deuxièmes moyens 16 de génération d'un effort de rappel du levier de liaison 24. Les deuxièmes moyens 16 sont agencés en parallèle des premiers moyens 4 de sorte que les premiers moyens et les deuxièmes moyens 16 puissent fonctionner de façon indépendante les uns des autres tant qu'ils ne se touchent pas.

Les deuxièmes moyens 16 comportent un deuxième ressort 17 comprenant un premier plateau 18 qui est solidaire de l'une des extrémités du deuxième ressort 17 et un deuxième plateau 19 qui est solidaire de l'autre extrémité du deuxième ressort 17.

Les deuxièmes moyens 16 comportent en outre un élément de manoeuvre 20 qui est monté pivotant sur le bâti 1 de sorte à pivoter autour de l'axe de rotation X. L'élément de manoeuvre comprend ici une première partie 21 équipée de moyens mécaniques de liaison temporaire avec le levier de liaison 24 et une deuxième partie 22 qui est solidaire de la première partie 21. La deuxième partie 22 est en outre liée au premier plateau 18 de sorte qu'une rotation de la deuxième partie 22 autour de l'axe de rotation X entraîne un déplacement du premier plateau 18 relativement au deuxième plateau 19 et ainsi une mise sous contrainte du deuxième ressort 17.

Les deuxièmes moyens 16 comportent un deuxième organe moteur 28 auquel est relié un ensemble de transmission de mouvement comprenant ici un système de transformation de mouvement 29, tel qu'un ensemble vis sans fin/écrou, et un système de réduction 30. La vis sans fin est liée en rotation à un arbre de sortie du deuxième organe moteur 28 et forme ainsi l'élément d'entrée de l'ensemble de transmission. L'arbre de sortie du système de réduction 30 est solidaire du deuxième plateau 19 du deuxième ressort 17 et forme ainsi l'élément de sortie de l'ensemble de transmission.

Le levier de liaison 24 comporte également des moyens mécaniques de liaison temporaire avec l'élément de manoeuvre 20. A cet effet, les moyens mécaniques de liaison temporaire du levier de liaison 24 comportent une portion 25 qui est solidaire du levier de liaison 24 et qui est conformée pour venir en butée contre la première partie 21 de l'élément de manoeuvre 20. De façon particulière, la portion 25 est conformée en un secteur angulaire. Ici, les moyens mécaniques de liaison temporaire de l'élément de manoeuvre 20 comportent un premier doigt de manoeuvre 26 courbé et solidaire d'une des extrémités de la première partie 21. Les moyens mécaniques de liaison temporaire de l'élément de manoeuvre 20 comportent en outre un deuxième doigt de manoeuvre 27 courbé et solidaire de l'autre des extrémités de la première partie 21. Les doigts de manoeuvre 26, 27 définissent ainsi un arc de cercle à l'intérieur duquel le secteur angulaire 25 peut être déplacé selon l'axe de rotation X sans toucher les doigts de manoeuvre 26, 27 et donc sans contraindre le deuxième ressort 17. Le premier doigt de manoeuvre 26 forme ainsi un premier point d'ancrage, sous la forme ici d'une première butée mécanique, pour le secteur angulaire 25 et le deuxième doigt de manoeuvre 27 forme un deuxième point d'ancrage, sous la forme ici d'une deuxième butée mécanique, pour le secteur angulaire 25. L'élément de manoeuvre 20 est ici conformé de sorte que l'arc de cercle défini par les deux doigts de manoeuvre 26, 27 présente un angle β supérieur à l'angle α délimité par les moyens mécaniques 3 de limitation de la course angulaire du levier de liaison 24 afin que les deux points d'ancrage, c'est-à-dire ici les deux butées mécaniques, puissent être toutes deux hors de la plage angulaire 200.

Ainsi, lorsque le levier de liaison 24 est déplacé par le pilote, via le levier de commande 2, le premier ressort 5 est mis sous contrainte ce qui engendre la génération d'un premier effort de rappel sur le levier de liaison 24 et donc du levier de commande 2. Si le pilote déplace le levier de liaison 24 jusqu'à ce que le secteur angulaire 25 vienne coopérer avec l'un des doigts de manoeuvre 26, 27 le secteur angulaire 25 entraîne en rotation l'élément de manoeuvre 20 qui entraîne à son tour un déplacement du premier plateau 18 du deuxième ressort 17 relativement au deuxième plateau 19 du deuxième ressort 17. Le deuxième ressort 17 est également mis sous contrainte ce qui engendre un deuxième effort de rappel sur le levier de liaison 24, et donc du levier de commande 2,s'ajoutant au premier effort. Le pilote ressent alors une résistance accrue du fait que le levier de commande 2 est alors associé, via le levier de liaison 24, au premier ressort 5 et du deuxième ressort 17.

Lorsque le deuxième ressort 17 n'est pas contraint, c'est-à-dire qu'il n'y a pas d'engagement entre le levier de liaison 24 et l'élément de manoeuvre 20, le deuxième organe moteur 28 est agencé pour déplacer le deuxième ressort 17, via le deuxième plateau 19, pour modifier la position des deux extrémités du deuxième ressort 17 relativement aux moyens mécaniques 3 de limitation de la course angulaire lorsque le deuxième ressort 17 est non contraint. Comme l'élément de manoeuvre 20 est lié par sa deuxième partie 22 au premier plateau 18, le déplacement du premier plateau entraîne une rotation correspondante autour de l'axe X de l'élément de manoeuvre 20. L'élément de manoeuvre 20 étant ainsi agencé pour pouvoir être déplacé par le deuxième organe moteur 28 en même temps que le deuxième ressort 17, le deuxième organe moteur 28 permet conjointement de déplacer les doigts de manoeuvre 26, 27 et ainsi de modifier la position des deux butées mécaniques dans la plage angulaire 200.

De préférence, les deuxièmes moyens 16 comportent un premier capteur d'état de contrainte 31 du deuxième ressort 17. Le premier capteur 31 comporte par exemple un micro-rupteur dont le signal de sortie est égal à 1 si le deuxième ressort 17 n'est pas contraint et est égal à 1 si le deuxième ressort 17 est contraint. Les deuxièmes moyens 16 comportent en outre, pour des questions de redondance, un deuxième capteur d'état de contrainte 32 du deuxième ressort 17 identique au premier capteur d'état de contrainte 31. Par ailleurs, les deuxièmes moyens 16 comportent ici un premier capteur de déplacement angulaire 33 agencé au niveau du premier plateau 18 pour estimer la position angulaire du premier plateau 18 relativement au deuxième plateau 19.Le capteur 33 indique ainsi à tout instant la position de l'élément de manoeuvre 20 qui est lié au premier plateau 18. Le premier capteur de déplacement angulaire 33 est par exemple un capteur RVDT. Pour des questions de redondance, les deuxièmes moyens 16 comportent également un deuxième capteur de déplacement angulaire 34 identique à celui qui vient d'être décrit.

Le deuxième organe moteur 28 est en outre alimenté via l'unité de commande U qui contrôle déjà l'alimentation du premier organe moteur 8. L'unité de commande U contrôle l'alimentation du deuxième organe moteur 28 notamment à partir des informations générées par le premier capteur de déplacement angulaire 33, par le deuxième capteur de déplacement angulaire 34, par le premier capteur d'état de contrainte 31 et par le deuxième capteur d'état de contrainte 32.

De façon particulière, l'ensemble de transmission de mouvement comporte des moyens d'accouplement temporaire 35 agencés ici dans l'ensemble de transmission de mouvement entre le système de transformation de mouvement 29 et le système de réduction 30. Les moyens d'accouplement temporaire 35 peuvent être désactivés directement par l'unité de commande U.

Grâce à l'unité de commande U et au deuxième organe moteur 28, il est possible de modifier conjointement la position relative des deux extrémités du deuxième ressort 17 relativement aux moyens mécaniques 3 de limitation de la course angulaire, lorsque le premier ressort 5 n'est pas sous contrainte et lorsque le deuxième ressort 17 n'est pas sous contrainte, et la position des deux doigts de manoeuvre 26, 27 dans la plage angulaire 200. Il s'avère donc possible de modifier la ou les positions prédéterminées du levier de liaison 24 à partir desquelles le levier de liaison 24 vient entraîner en rotation l'élément de manoeuvre 20 (via la coopération secteur angulaire/doigt de manoeuvre) et donc vient entraîner une mise sous contrainte du deuxième ressort 17 de sorte que le levier de liaison 24, et donc le levier de commande 2, se retrouve également lié au deuxième ressort 17. Les deuxièmes moyens 16 sont donc agencés pour permettre un déplacement des butées mécaniques relativement aux moyens de limitation 3 de la course angulaire pour redéfinir en service la ou les positions prédéterminées.

En plaçant de façon appropriée les butées mécaniques, celles-ci définissent une ou des positions prédéterminées du levier de commande 2 (et donc du levier de liaison 24) pour lesquelles la résistance imposée au levier de commande 2 (et donc au levier de liaison 24) est augmentée lorsque le pilote s'approche des limites opérationnelles de la turbine.

Sachant que les limites opérationnelles de la turbine peuvent évoluer en fonction notamment de la phase de vol dans laquelle le pilote se trouve, les deuxièmes moyens 16 sont avantageusement agencés pour redéfinir en service la position des butées mécaniques, et ainsi adapter les positions prédéterminées, en fonction des phases de vol pour tenir compte du changement des limites opérationnelles.

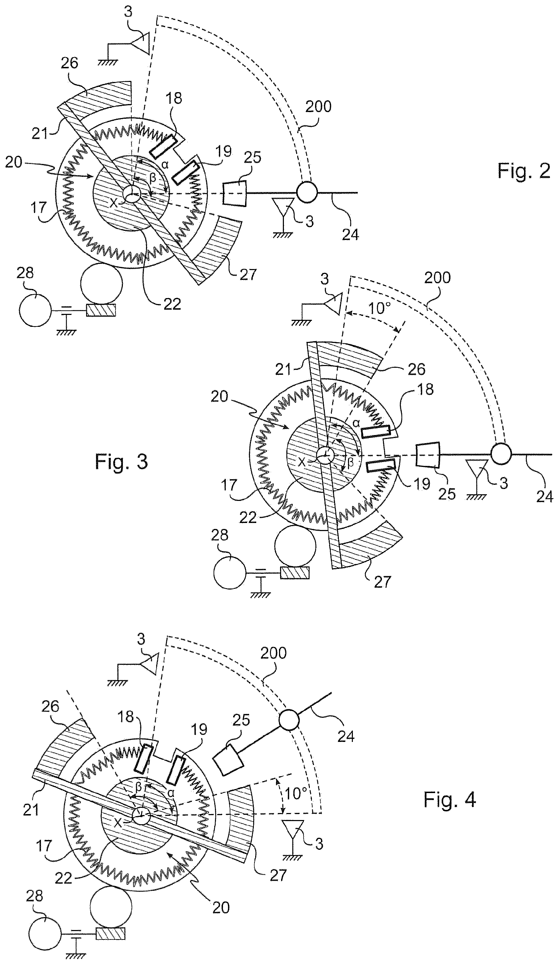

Typiquement, comme illustré à la figure 2, en phase d'arrêt, c'est-à-dire lorsque l'hélicoptère est au sol et que la turbine est éteinte, les deuxièmes moyens 16 sont agencés de sorte que l'élément de manoeuvre 20 soit dans une première position dite position neutre. Dans cette position, les deux doigts de manoeuvre 26, 27 se situent hors de la plage angulaire 200 de sorte que le levier de liaison 24 peut être déplacé dans toute la plage angulaire 200 sans être relié au deuxième ressort 17.

En référence à la figure 3, en phase de décollage, le deuxième organe moteur 28 est alimenté de sorte à entraîner simultanément en rotation les deux plateaux du deuxième ressort 17 et donc également l'élément de manoeuvre 20. La position de l'élément de manoeuvre 20 est ainsi modifiée de sorte que cette fois le premier doigt de manoeuvre 26 se situe dans la plage angulaire 200, le deuxième doigt de manoeuvre 27 se situant toujours hors de la plage angulaire 200. Plus précisément ici le premier doigt de manoeuvre 26 s'étend de sorte à former une butée mécanique 10 degrés avant la position haute de la plage angulaire 200.

De la sorte, lors du décollage, le levier de liaison 24 peut être déplacé dans toute la plage angulaire 200 entre la position basse de la plage angulaire 200 et la position prédéterminée définie par le premier doigt de manoeuvre 24 en étant seulement relié au premier ressort 5. Si le levier de liaison 24 est déplacé au-delà de la position prédéterminée, le levier de liaison 24 entraîne en rotation l'élément de manoeuvre 20 qui va à son tour déplacer le premier plateau 18 du deuxième ressort 17 relativement au deuxième plateau 19 pour contraindre le deuxième ressort 17. Le levier de liaison 24, et donc le levier de commande 2, est alors lié au premier ressort 5 et au deuxième ressort 17.Le pilote ressent dès lors une résistance accrue dans le levier de commande 2 lui indiquant qu'il s'approche des limites opérationnelles de la turbine à savoir ici qu'il s'approche d'un surrégime de la turbine. Dans ce cas, le pilote abaisse le levier de liaison 24, pour redescendre sous la position prédéterminée et ne pas endommager la turbine. Toutefois, en cas d'urgence, le pilote peut malgré tout continuer à bouger le levier de liaison 24 vers la position haute de la plage angulaire 200.

En référence à la figure 4, dans une autre phase de vol, le deuxième organe moteur 28 est alimenté de sorte à entraîner simultanément en rotation les deux plateaux du deuxième ressort 17 et donc également l'élément de manoeuvre 20. La position de l'élément de manoeuvre 20 est ainsi modifiée de sorte que cette fois le premier doigt de manoeuvre 26 se situe hors de la plage angulaire 200, le deuxième doigt de manoeuvre 27 se situant lui dans la plage angulaire 200. Plus précisément ici le deuxième doigt de manoeuvre 27 s'étend de sorte à former une butée mécanique 10 degrés avant la position basse de la plage angulaire 200. Le deuxième doigt de manoeuvre 27 délimite ainsi ici la position prédéterminée à laquelle le levier de liaison 24 devient lié au deuxième ressort 17.

Ainsi, grâce à l'invention, les deuxièmes moyens 16 sont agencés pour redéfinir en service la position des butées mécaniques et donc des positions prédéterminées. Il est donc possible de modifier en continu le moment où le pilote ressentira une résistance accrue (du fait de la liaison entre le deuxième ressort 17 et le levier de liaison 24) indiquant qu'il se rapproche des limites opérationnelles de la turbine.

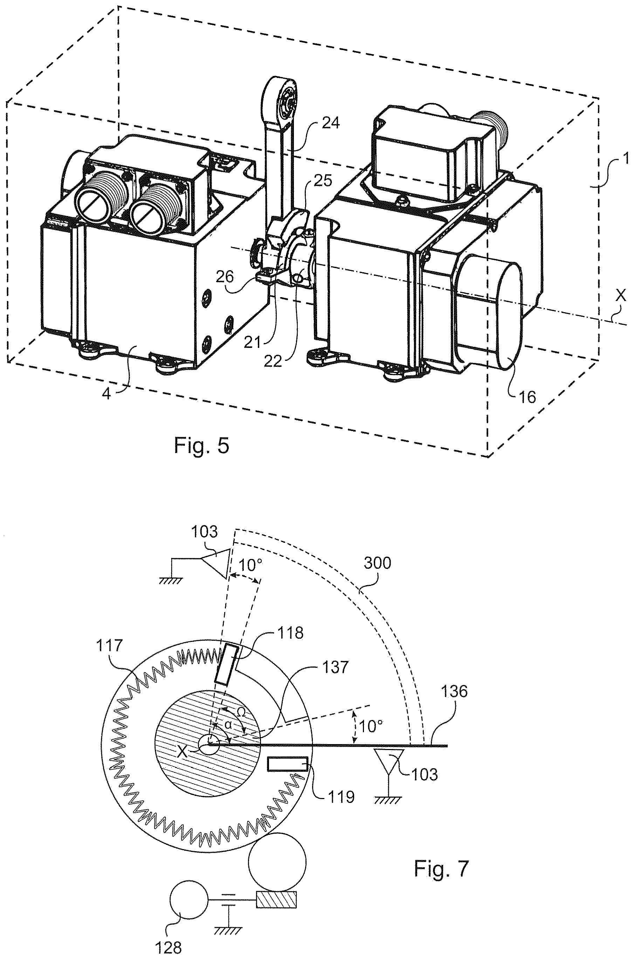

En référence aux figures 6 et 7, un deuxième mode de réalisation de l'invention va être à présent décrit. Les éléments en commun avec le premier mode de réalisation conservent leur numérotation augmentée d'une centaine.

La différence avec le premier mode de réalisation réside dans la liaison temporaire entre les deuxièmes moyens 116 et le levier de liaison 136. En effet, dans le deuxième mode de réalisation, comme bien visible à la figure 7, le deuxième ressort 117 avec ses deux plateaux 118, 119 forme lui-même l'élément de manoeuvre qui va coopérer avec le levier de liaison 136 pour être lié temporairement audit levier de liaison 136. Les plateaux du ressort 118, 119 forment donc eux-mêmes les butées mécaniques qui définissent les positions prédéterminées au-delà desquelles le levier de liaison 136 et les deuxièmes moyens 116 sont liés.

Le deuxième ressort 117 est ici conformé de sorte que l'arc de cercle Ω défini par les plateaux du deuxième ressort 117 présente un angle inférieur à l'angle α délimité par les moyens mécaniques 3 de limitation de la course angulaire du levier de liaison 136 afin que les deux butées mécaniques puissent être toutes deux dans la plage angulaire 300.

Par exemple, en référence à la figure 7, dans une phase de vol particulière, les deuxièmes moyens 116 sont agencés de sorte que le premier plateau 118 du deuxième ressort 117 se situe dans la plage angulaire 300 pour définir une première position prédéterminée à partir de laquelle le levier de liaison 136 est lié au deuxième ressort 117. Plus précisément ici le premier plateau 118 s'étend à 10 degrés avant la position haute de la plage angulaire 300. Les deuxièmes moyens 116 sont en outre agencés de sorte que le deuxième plateau 118 du deuxième ressort 117 se situe dans la plage angulaire 300 pour définir une deuxième position prédéterminée à partir de laquelle le levier de liaison 136 devient lié au deuxième ressort 117. Plus précisément ici le deuxième plateau 119 s'étend à 10 degrés avant la position basse de la plage angulaire 300.

De la sorte, le levier de liaison 136 peut être déplacé dans toute la plage angulaire 300 entre la première position prédéterminée et la deuxième position prédéterminée en étant seulement relié au premier ressort 105. Si le levier de liaison 136 est déplacé au-delà de la première position prédéterminée, le levier de liaison 136 entraîne un déplacement du premier plateau 118 du deuxième ressort 117 relativement au deuxième plateau 119 du deuxième ressort 117 pour contraindre le deuxième ressort 117. Le levier de liaison 136 est alors lié au premier ressort 105 et au deuxième ressort 117. Le pilote ressent dès lors une résistance accrue dans le levier de liaison 136 lui indiquant qu'il s'approche des limites opérationnelles de la turbine à savoir qu'il s'approche d'un surrégime de la turbine. Par ailleurs, si le levier de liaison 136 est déplacé au-delà de la deuxième position prédéterminée, le levier de liaison 136 entraîne un déplacement du deuxième plateau 119 du deuxième ressort 117 relativement au premier plateau 118 du deuxième ressort 117 pour contraindre le deuxième ressort 117. Le levier de liaison 136 est alors lié au premier ressort 105 et au deuxième ressort 117. Le pilote ressent dès lors une résistance accrue dans le levier de liaison 136 lui indiquant qu'il s'approche des limites opérationnelles de la turbine à savoir qu'il s'approche d'un sous-régime de la turbine.

Bien entendu l'invention n'est pas limitée aux modes de réalisation décrits et on peut y apporter des variantes de réalisation sans sortir du cadre de l'invention tel que défini par les revendications.

En particulier, bien qu'ici le dispositif de commande de vol soit décrit en relation avec la commande du pas collectif d'un hélicoptère, cette application n'est pas limitative et le dispositif de commande de vol de l'invention pourra être utilisé pour toute autre application comme par exemple pour la gestion de mouvement de tangage, de roulis ou de lacet d'un avion ou d'un hélicoptère.

Bien qu'ici les deuxièmes moyens comportent toujours deux points d'ancrage permettant de définir des positions prédéterminées différentes dans la plage angulaire, le dispositif pourra être agencé pour ne comporter qu'un seul point d'ancrage permettant de définir une unique position prédéterminée. Par exemple, dans le cas du pas collectif d'un hélicoptère, les deuxièmes moyens pourront comporter un seul point d'ancrage pour avertir le pilote qu'il s'approche d'un surrégime de la turbine, le sous-régime de la turbine étant alors autorisé.

L'élément de manoeuvre pourra être conformé de sorte que l'arc de cercle défini par ses deux points d'ancrage présente un angle inférieur à celui délimité par les moyens mécaniques de limitation de la course angulaire du levier de liaison.

## Revendications

1. Dispositif de commande de vol d'un aéronef, comportant :
- un levier de liaison (24 ; 136) qui est destiné à être solidarisé à un levier de commande (2 ; 102) et qui est apte à être pivoté autour d'au moins un axe de rotation (X),
- des moyens mécaniques (3 ; 103) de limitation d'une course angulaire du levier de liaison selon ledit axe de rotation, la course angulaire étant alors définie par une plage angulaire finie,
- des premiers moyens (4 ; 104) de génération d'un effort de rappel du levier de liaison autour dudit axe de rotation, les premiers moyens étant reliés de façon permanente au levier de liaison,
- des deuxièmes moyens (16 ; 116) de génération d'un effort de rappel du levier de liaison, qui sont agencés en parallèle des premiers moyens, au moins un élément de manoeuvre (20) des deuxièmes moyens et le levier de liaison comprenant des moyens mécaniques de leur liaison temporaire qui sont agencés pour être actifs lorsque le levier de liaison est déplacé au-delà d'une position angulaire prédéterminée dans la plage angulaire, les deuxièmes moyens comprenant au moins un point d'ancrage (26, 27 ; 118 ; 119) apte à définir ladite position prédéterminée et étant agencés pour permettre un déplacement dudit point d'ancrage relativement aux moyens de limitation de la course angulaire pour redéfinir en service ladite position prédéterminée.

2. Dispositif selon la revendication 1, dans lequel les deuxièmes moyens (16 ; 116) comprennent :
- un ressort (17 ; 117) comprenant au moins un plateau solidaire de l'une de ses extrémités,
- un organe moteur (28 ; 128) apte à déplacer le ressort pour modifier la position des deux extrémités du ressort relativement aux moyens mécaniques de limitation de la course angulaire lorsque le ressort est non contraint.

3. Dispositif selon la revendication 1, dans lequel l'élément de manoeuvre (20) comporte le point d'ancrage (26, 27), l'élément de manoeuvre étant agencé pour pouvoir être déplacé par l'organe moteur en même temps que le ressort lorsque le ressort est non contraint.

4. Dispositif selon la revendication 3, dans lequel l'élément de manoeuvre comporte une première partie (21) équipée de moyens mécaniques de liaison temporaire avec le levier de liaison et une deuxième partie (22) qui est solidaire de la première partie et qui est solidaire de l'une des extrémités du ressort pour lier temporairement le levier de liaison et le ressort lors de la rotation du levier de liaison au-delà de la position prédéterminée.

5. Dispositif selon la revendication 3, dans lequel les moyens mécaniques de liaison temporaire comportent une portion (25) qui est solidaire du levier de liaison et qui est conformée pour venir en butée contre l'élément.

6. Dispositif selon la revendication 5, dans lequel la portion (25) est conformée en un secteur angulaire.

7. Dispositif selon la revendication 5, dans lequel la première partie (21) comporte deux doigts de manoeuvre (26, 27) en tant que moyens mécaniques de liaison temporaire, les doigts de manoeuvre définissant ainsi entre eux un arc de cercle à l'intérieur duquel la portion (25) peut être déplacée.

8. Dispositif selon la revendication 2, dans lequel le plateau (118) forme directement le point d'ancrage.

9. Dispositif selon la revendication 1, dans lequel les deuxièmes moyens (16 ; 116) comportent un premier point d'ancrage (26 ; 118) et un deuxième point d'ancrage (27 ; 119) définissant chacune une position prédéterminée dans la plage angulaire, lesdits deuxièmes moyens étant agencés pour permettre seuls un déplacement simultané desdits points d'ancrage relativement aux moyens de limitation de la course angulaire pour redéfinir en service lesdites positions prédéterminées.

## Patentansprüche

1. Vorrichtung zur Flugsteuerung eines Luftfahrzeugs, umfassend:
- einen Verbindungshebel (24; 136), der dazu bestimmt ist, mit einem Steuerhebel (2; 102) verbunden zu werden, und der dazu geeignet ist, um mindestens eine Rotationsachse (X) gedreht zu werden,
- mechanische Mittel (3; 103) zur Begrenzung eines Winkelhubs des Verbindungshebels um die genannte Rotationsachse, wobei der Winkelhub dann von einem begrenzten Winkelbereich definiert ist,
- erste Mittel (4; 104) zur Erzeugung einer Rückstellkraft auf den Verbindungshebel um die genannte Rotationsachse, wobei die ersten Mittel dauerhaft mit dem Verbindungshebel verbunden sind,
- zweite Mittel (16; 116) zur Erzeugung einer Rückstellkraft auf den Verbindungshebel, die parallel zu den ersten Mitteln angeordnet sind, wobei mindestens ein Betätigungselement (20) der zweiten Mittel und der Verbindungshebel mechanische Mittel für deren temporäre Verbindung umfassen, die so ausgebildet sind, dass sie aktiv sind, wenn der Verbindungshebel über eine vorbestimmte Winkelposition in dem Winkelbereich hinaus bewegt wird, wobei die zweiten Mittel mindestens einen Verankerungspunkt (26, 27; 118; 119) umfassen, der dazu geeignet ist, die genannte vorbestimmte Position zu definieren, und so ausgebildet sind, dass sie eine Verschiebung des Verankerungspunktes relativ zu den Begrenzungsmitteln zur Begrenzung des Winkelhubes ermöglichen, um im Einsatz die genannte vorbestimmte Position neu zu definieren.

2. Vorrichtung nach Anspruch 1, bei der die zweiten Mittel (16; 116) umfassen:
- eine Feder (17; 117), die mindestens eine Platte umfasst, die fest mit einem ihrer Enden verbunden ist,
- ein Antriebselement (28; 128), das dazu geeignet ist, die Feder zu verschieben, um die Position der beiden Enden der Feder relativ zu den mechanischen Begrenzungsmitteln zur Begrenzung des Winkelhubs zu verändern, wenn die Feder unbelastet ist.

3. Vorrichtung nach Anspruch 1, bei der das Betätigungselement (20) den Verankerungspunkt (26, 27) umfasst, wobei das Betätigungselement so ausgebildet ist, dass es von dem Antriebselement gleichzeitig mit der Feder verschoben werden kann, wenn die Feder unbelastet ist.

4. Vorrichtung nach Anspruch 3, bei der das Betätigungselement einen ersten Teil (21) umfasst, der mit mechanischen Mittel zur temporären Verbindung mit dem Verbindunghebel ausgestattet ist, sowie einen zweiten Teil (22), der fest mit dem ersten Teil verbunden ist und der fest mit einem der Enden der Feder verbunden ist, um den Verbindungshebel und die Feder während der Drehung des Verbindungshebels über die vorbestimmte Position hinaus temporär zu verbinden.

5. Vorrichtung nach Anspruch 3, bei der die mechanischen Mittel zur temporären Verbindung einen Abschnitt (25) umfassen, der fest mit dem Verbindungshebel verbunden und der so geformt ist, dass er am Element zur Anlage kommt.

6. Vorrichtung nach Anspruch 5, bei der der Abschnitt (25) als Winkelsektor geformt ist.

7. Vorrichtung nach Anspruch 5, bei der der erste Teil (21) zwei Betätigungsfinger (26, 27) als mechanische Mittel zur temporären Verbindung umfasst, wobei die Betätigungsfinger dann zwischen sich einen Kreisbogen definieren, innerhalb dessen der Abschnitt (25) verschoben werden kann.

8. Vorrichtung nach Anspruch 2, bei der die Platte (118) direkt den Verankerungspunkt bildet.

9. Vorrichtung nach Anspruch 1, bei der die zweiten Mittel (16; 116) einen ersten Verankerungspunkt (26; 118) und einen zweiten Verankerungspunkt (27; 119) umfassen, die jeweils eine vorbestimmte Position in dem Winkelbereich definieren, wobei die genannten zweiten Mittel so ausgebildet sind, dass sie nur eine gleichzeitige Verschiebung der genannten Verankerungspunkte relativ zu den Begrenzungsmittel zur Begrenzung des Winkelhubes gestatten, um im Einsatz die genannten vorbestimmten Positionen neu zu definieren.

## Claims

1. A flight control device for an aircraft, the device comprising:
• a connection lever (24; 136) that is designed to be secured to a control lever (2; 102) and that is suitable for being pivoted about at least one pivot axis (X) ;
• mechanical means (3; 103) for limiting an angular stroke of the connection lever, the angular stroke thus being defined by a finite angular range;
• first means (4; 104) for generating force feedback on the connection lever about said pivot axis, the first means being connected permanently to the connection lever; and
• second means (16; 116) for generating force feedback on the connection lever, which means are arranged in parallel with the first means; at least one operating element (20) selected from the second means, and the connection lever, comprising mechanical means for connecting them together temporarily, which means are arranged to be active when the connection lever is moved beyond a predetermined angular position in the angular range; the second means including at least one anchoring point (26, 27; 118; 119) that is suitable for defining said predetermined position and being arranged to enable movement of said anchoring point relative to limiter means for limiting angular stroke in order to act while in use to redefine said predetermined positions.

2. A device according to claim 1, wherein the second means (16; 116) comprise:
• a spring (17; 117) including at least one plate secured to one of its ends;
• a drive member (28; 128) that is suitable for moving the spring in order to modify the position of the two ends of the spring relative to the mechanical limitation means of the angular stroke when the spring is unloaded.

3. A device according to claim 1, wherein the operating element (20) includes the anchoring point (26, 27), the operating element being arranged to be able to be moved by the drive member at the same time as the spring when the spring is unloaded.

4. A device according to claim 3, wherein the operating element comprises a first portion (21) fitted with mechanical means for temporary connection to the connection lever and a second portion (22) that is secured to the first portion and that is secured to one of the ends of the spring in order to connect temporarily the connection lever and the spring during pivoting of the connection lever beyond the predetermined position.

5. A device according to claim 3, wherein the mechanical means for temporary connection comprise a part (25) that is secured to the connection lever and that is shaped to come into abutment against the element.

6. A device according to claim 5, wherein the part (25) is shaped as an angular sector.

7. A device according to claim 5, wherein the first portion (21) comprises two operating fingers (26, 27) as mechanical means for temporary connection, the operating fingers thus together defining a circular arc inside which the part (25) can be moved.

8. A device according to claim 2, wherein the plate (118) directly forms the anchoring point.

9. A device according to claim 1, wherein the second means (16; 116) comprise a first anchoring point (26; 118) and a second anchoring point (27; 119) each defining a predetermined position in the angular range, said second means being arranged to enable only simultaneous movement of said anchoring points relative to the means for limiting angular stroke in order to act while in use to redefine said predetermined positions.
